# EUROPÄISCHE PATENTSCHRIFT

(11) **EP 2 132 864 B1**
(45) Veröffentlichungstag und Bekanntmachung des Hinweises auf die Patenterteilung: **06.02.2019**
(21) Anmeldenummer: 07818262.3
(22) Anmeldetag: 20.09.2007
(51) Int. Cl.: H02K 41/03, F16C 29/00, H02K 7/08, F16C 29/06

(54) **ELEKTRISCHE LINEARDIREKTANTRIEBSVORRICHTUNG MIT EINEM ZWEI FÜHRUNGSSCHIENEN ZUR LINEARFÜHRUNG EINES ANGETRIEBENEN SCHLITTENS AUFWEISENDER STATOR**
ELECTRICAL DIRECT LINEAR DRIVE DEVICE HAVING TWO GUIDE RAILS FOR THE LINEAR GUIDANCE OF A STATOR HAVING A DRIVEN SLED
DISPOSITIF D'ENTRAINEMENT ELECTRIQUE LINEAIRE DIRECT AVEC UN STATOR PRESENTANT DEUX RAILS DE GUIDAGE POUR LE GUIDAGE LINEAIRE D'UN COULISSEAU ENTRAINE

(43) Veröffentlichungstag der Anmeldung: 16.12.2009
(73) Patentinhaber: FESTO AG & Co. KG, 73734 Esslingen (DE)
(72) Erfinder: FINKBEINER, Matthias, 71159 Mötzingen (DE); UNGER, Tom, 73732 Esslingen (DE)
(74) Vertreter: Patentanwälte Magenbauer & Kollegen Partnerschaft mbB
(86) Internationale Anmeldenummer: PCT/EP2007/008170
(87) Internationale Veröffentlichungsnummer: WO 2009/039865

(56) Entgegenhaltungen:
- EP-A1- 1 404 011
- WO-A-2004/100342
- DE-A1- 4 301 434
- DE-A1-102005 019 606
- DE-U1- 29 807 438
- GB-A- 2 176 722
- GB-A- 2 179 279
- GB-A- 2 194 907
- US-A1- 2003 205 445
- US-B1- 6 191 507

## Beschreibung

Die Erfindung betrifft eine elektrische Lineardirektantriebsvorrichtung mit den Merkmalen des Oberbegriffs des Anspruchs 1.

Bei einer, aus der DE 29807438 U1 bekannten Linearantriebsvorrichtung sind zwei Führungsschienen an einer Seite des Stators in einer im Wesentlichen gleichen Ebene angeordnet. Zum Ausgleich von Toleranzen und Wärmedehnungen dient eine der Führungsschienen nur als Auflage und das zugeordnete Führungselement des Schlittens ist quer zur Führungs-Längsrichtung frei verschiebbar. Hierdurch spielt zwar die Wärmedehnung des sich im Betrieb erhitzenden Schlittens keine wesentliche Rolle mehr, jedoch eignet sich eine derartige Anordnung nur für eine horizontale Auflage des Schlittens auf den Führungsschienen. Bei allen anderen Positionen der Linearantriebsvorrichtung ist keine ausreichende Führung des Schlittens mehr gewährleistet.

Aus der DE 43 01 434 A1 ist eine Linearführungsanordnung bekannt, bei der mindestens zwei auf einer Basis angeordnete Führungsschienen mit jeweils einer Führungsschienenachse, die im Wesentlichen parallel zueinander verlaufen, eine Führungsebene definieren. Ferner befindet sich mindestens einen Führungswagen auf jeder der Führungsschienen, der längs der jeweiligen Führungsschienenachse in einer Laufrichtung verschiebbar ist. Zudem ist eine Tischbaugruppe vorgesehen, welche mit jeweils mindestens einem Führungswagen auf jeder der beiden Führungsschienen verbunden ist. Dabei umfasst die Linearführungsanordnung Ausgleichsmittel für quer zu den Führungsschienenachsen auftretende mechanische Spannungen, wobei die Tischbaugruppe mindestens zwei Tischelemente umfasst, die auf einer Führungsschiene geführt und durch quer zur Laufrichtung und parallel zur Führungsebene elastisch nachgiebige Verbindungsmittel miteinander verbunden sind.

Aus der GB 2 194 907 A ist eine Werkzeugmaschine mit wenigstens einer Linearführung bekannt, die zwischen zwei Elementen angeordnet ist, so dass das eine Element relativ zum anderen Element geführt und verschiebbar ist und wobei ein elektrischer Motor zur Bewegung des einen Elements relativ zum anderen Element vorgesehen ist. Dabei ist der elektrische Motor als Linearantrieb ausgebildet, der sich parallel zur Linearbewegungsrichtung erstreckt und einen Stator und einen Läufer umfasst, die am ersten Element bzw. am zweiten Element angebracht sind.

Die WO 2004/100342 A1 offenbart eine Linearführung mit an einem Gehäuse parallel zueinander angeordneten Führungsschienen und mit einem Schlitten, der an den Führungsschienen mittels Linearwälzlagern linearbeweglich gelagert ist sowie mit einem zwischen den Führungsschienen angeordneten Linearmotor, der ein Primärteil und Sekundärteil aufweist, wobei das Primärteil mit zwei an gegenüberliegenden Seiten des Primärteils angeordneten Sekundärteilen zusammenwirkt.

Aus der US 2003/0205445 A1 ist eine Linearführungseinheit bekannt, die eine Führungsschiene und einen beweglich an der Führungsschiene aufgenommenen Schlitten aufweist, wobei die Führungsschiene und der Schlitten einander gegenüberliegende Lageroberflächen aufweist und Wälzlagerelemente längs eines Umlaufpfades geführt sind, der zumindest abschnittsweise durch die Lageroberflächen bestimmt wird sowie mit einem Dichtungselement zur bereichsweisen Abdichtung des Umlaufpfads, wobei der Schlitten einen hakenförmigen Ausleger aufweist, der zur Aufnahme des Dichtmittels ausgebildet ist.

Aus der DE 10 2005 019 606 A1 ist eine Linearführungseinheit mit einem länglichen Führungsträger bekannt, die zwei in Führungsrichtung verlaufende, im Wesentlichen parallele Führungsschienen umfasst, die um eine zur Führungsrichtung parallele Verdrehachse relativ zueinander verdreht angeordnet sind. Ferner ist ein Laufwagen vorgesehen, der in Führungsrichtung verschieblich an den Führungsschienen gelagert ist. Die Führungsschienen liegen im Wesentlichen ohne Bewegungsspiel an wenigstens zwei im Wesentlichen in Führungsrichtung verlaufenden Gegenanlageflächen des Führungsträgers an, wobei zwei der Gegenanlageflächen einen vorbestimmten Winkel, vorzugsweise höchstens 90 Grad, einfließen.

Aus der US 6, 191, 507 B1 ist ein modulares Antriebssystem bekannt, bei dem eine Führungsschiene durch mehrere Schienensegmente gebildet wird, wobei die Schienensegmente jeweils individuell ansteuerbare Spulen umfassen und längs der Führungsschiene bewegliche Paletten mit jeweils mit einer Permanentmagnetanordnung ausgerüstet sind, die für eine magnetische Wechselwirkung mit Magnetfeldern der Spulen ausgebildet sind. Jede der Paletten rollt mit geeigneten Rollen auf zwei parallel zueinander ausgerichteten Führungsbahnen, die an der Führungsschiene ausgebildet sind. Ferner umfasst die Führungsschiene abseits der Spulen und der Führungsbahnen einen Schacht zur Aufnahme einer Positionsmesseinrichtung.

Eine Aufgabe der vorliegenden Erfindung besteht darin, eine von der räumlichen Position der Lineardirektantriebsvorrichtung weitgehend unabhängige Führungseinrichtung mit zwei Führungsschienen zu schaffen, bei der dennoch Toleranzen und Wärmedehnungen in ausreichendem Maße beherrschbar sind.

Diese Aufgabe wird erfindungsgemäß durch eine Lineardirektantriebsvorrichtung mit den Merkmalen des Anspruchs 1 gelöst.

Dabei ist vorgesehen, dass die Führungsschienen an aneinandergrenzenden, unterschiedlich orientierten Seiten des Stators angeordnet sind und dass der Schlitten gelenkig ausgebildet ist und jede dieser Seiten wenigstens teilweise übergreift, und dass Führungskanäle für die Führungsschienen aufweisende Führungselemente am Schlitten angeordnet sind, wobei der Schlitten ein im Wesentlichen L-förmiges Profil besitzt und, insbesondere zwei, rechtwinklig zueinander angeordnete plattenförmige Schlittenbereiche aufweist. Ferner ist vorgesehen, dass der Schlitten plattenförmig ausgebildete Schlittenbereiche aufweist, die über eine parallel zu den Führungsschienen verlaufende Schwenkachse miteinander verbunden sind und an denen die Führungselemente ihrerseits gelenkig angebracht sind, wobei die plattenförmigen Schlittenbereiche rechtwinklig zueinander angeordnet sind.

Außenseiten der Schlittenbereiche können als Montageflächen zum Anbringen von Anbauten oder zur variablen Befestigung des Schlittens an einer Basis dienen, wobei im zweiten Falle der Stator das sich bewegende Element bildet.

Durch die erfindungsgemäße Anordnung der Führungsschienen, die im Wesentlichen um 90° versetzt zueinander angeordnet sind, ergeben sich günstigere Verhältnisse hinsichtlich Toleranzen und der Wärmedehnung, wobei die Lineardirektantriebsvorrichtung eine Vielzahl von räumlichen Positionen einnehmen kann. Der Schlitten übergreift wenigstens teilweise zwei Seiten des Stators, sodass durch die dadurch gebildeten zwei Montageflächen des Schlittens ein variabler Achsaufbau und variable Anbauten, wie zum Beispiel eine Schleppkette oder Kühlkörper, realisiert werden kann. Weiterhin werden durch diese Anordnung Mehrachssysteme ermöglicht.

Durch die in den Unteransprüchen aufgeführten Maßnahmen sind vorteilhafte Weiterbildungen und Verbesserungen der im Anspruch 1 angegebenen Lineardirektantriebsvorrichtung möglich.

In einer Ausbildung der Erfindung trägt der Schlitten die Antriebsspulenanordnung an seiner der Permanentmagnetanordnung am Stator gegenüberliegenden Seite, wobei auch die umgekehrte Anordnung möglich ist, das heißt, der Schlitten trägt dann die Permanentmagnetanordnung und der Stator die Antriebsspulenanordnung.

Der insbesondere als Strangpress- oder Stranggussprofil ausgebildete Stator besitzt in vorteilhafter Weise justierbare Fixiermittel für die Führungsschienen, die bevorzugt an Längsnuten des Stators mittels justierbarer Nutensteine fixierbar sind. Hierdurch ist die Führung in 2 Ebenen ausrichtbar und eine zweidimensionale Ausrichtung wird ermöglicht. Dabei können Fertigungstoleranzen ausgeglichen werden.

Der Schlitten ist an den Führungsschienen mittels zwei, vorzugsweise drei oder vier Führungselementen geführt, die derart formschlüssig mit den Führungsschienen zusammenwirken, dass nur eine Relativbewegung in der Längsrichtung der Führungsschienen möglich ist. Hierdurch kann die Lineardirektantriebsvorrichtung in einer beliebigen Raumorientierung montiert und betrieben werden. Dabei sind die Führungselemente bevorzugt als Kugelumlaufführungselemente ausgebildet.

Toleranzschwankungen hinsichtlich der Winkelzuordnung der Führungsschienen beziehungsweise Führungselemente können in vorteilhafter Weise dadurch ausgeglichen werden, dass die Führungselemente über gekrümmte Winkelausgleichselemente oder -bereiche an entsprechend gekrümmten Ausgleichsflächen oder - ausnehmungen fixierbar ausgebildet sind.

Ein perfekter Ausgleich von Toleranzen und Wärmedehnungen wird dadurch erreicht, dass der Schlitten gelenkig ausgebildet ist. Erfindungsgemäß weist der Schlitten über eine parallel zu den Führungsschienen verlaufende Schwenkachse miteinander verbundene Schlittenbereiche auf, an denen die Führungselemente ihrerseits gelenkig angebracht sind. Hierdurch können auch Toleranzen über die gesamte Hublänge ausgeglichen werden, sogar während der Bewegung. Die Schlittenbereiche sind dabei plattenförmig ausgebildet, um wie bei einer starren Ausführung des Schlittens Montagebereiche zu bilden. Zur gelenkigen Anbringung der Führungselemente sind diese erfindungsgemäß an gelenkig an den Schlittenbereichen angebrachten Halteelementen oder -platten fixiert.

Um einen festen Winkel von bevorzugt 90° zwischen den beiden Montageflächen zu erreichen, der unabhängig von der Wärmedehnung des Schlittens beibehalten werden soll, ist der von der Antriebskraft beaufschlagbare erste Schlittenbereich des Schlittens starr mit einem rechtwinklig dazu angeordneten plattenartigen Schlittenbereich verbunden, der den zweiten ein- oder zweiteilig ausgebildeten zweiten Schlittenbereich übergreift oder in im Wesentlich gleicher Ebene mit diesem angeordnet ist. Dabei bildet dieser plattenartige Schlittenbereich einen Montagebereich, dessen Winkel zum ersten Schlittenbereich, der ebenfalls einen Montagebereich bildet, immer aufrechterhalten bleibt, während Winkelveränderungen zwischen dem ersten Schlittenbereich und dem zweiten Schlittenbereich keinen Einfluss auf die Montageflächen ausüben.

In vorteilhafter Weise ist auch eine Positionsmesseinrichtung zur Abtastung von entlang des Stators angeordneten Positionsmarkierungen am Schlitten angeordnet, die beispielsweise eine magnetfeldempfindliche Sensoranordnung aufweisen kann, während die Positionsmarkierungen als magnetische Markierungen ausgebildet sind.

Ein Längskanal durch den Stator enthält in einer vorteilhaften Weiterbildung der Erfindung einen mit dem Schlitten mechanisch oder magnetisch gekoppelten Kolben, der als Antriebskolben oder Gravitations-Ausgleichseinrichtung ausgebildet sein kann.

Um Wärmedehnungen insbesondere bei einer starren Ausbildung des Schlittens möglichst gering zu halten, besteht der Schlitten aus einem Material mit geringem Wärmeausdehnungskoeffizienten, z. B. aus Stahl oder einer Stahllegierung und/oder aus CFK und/oder einem entsprechenden Verbundwerkstoff.

Ausführungsbeispiele der Erfindung sind in der Zeichnung dargestellt und in der nachfolgenden Beschreibung näher erläutert. Es zeigen:
- Figur 1: eine perspektivische Darstellung eines nicht zur Erfindung gehörenden Ausführungsbeispiels einer elektrischen Lineardirektantriebsvorrichtung,
- Figur 2: eine Querschnittsdarstellung einer Lineardirektantriebsvorrichtung mit einem schematisch dargestellten, gelenkig ausgebildeten Schlitten gemäß der Erfindung,
- Figur 3: eine perspektivische Ansicht des gelenkig ausgebildeten Schlittens gemäß der Erfindung,
- Figur 4: eine Querschnittsdarstellung mit einem schematisch dargestellten, gelenkig ausgebildeten Schlitten gemäß der Erfindung, bei dem ein Schlittenbereich durch eine starre Montageplatte übergriffen wird,
- Figur 5: eine perspektivische Darstellung eines nicht zur Erfindung gehörenden, starr ausgebildeten Schlittens, an dessen Innenseite vier Winkelausgleichsausnehmungen angeordnet sind,
- Figur 6: eine vergrößerte Darstellung einer nicht zur Erfindung gehörenden, am Stator fixierten Führungsschiene, die von einem Führungselement umgriffen wird, in einer Schnittdarstellung und
- Figur 7: eine entsprechende Darstellung, bei der das nicht zur Erfindung gehörende Führungselement als Kugelumlaufführungselement mit einem gekrümmten Winkelausgleichselement ausgebildet ist.

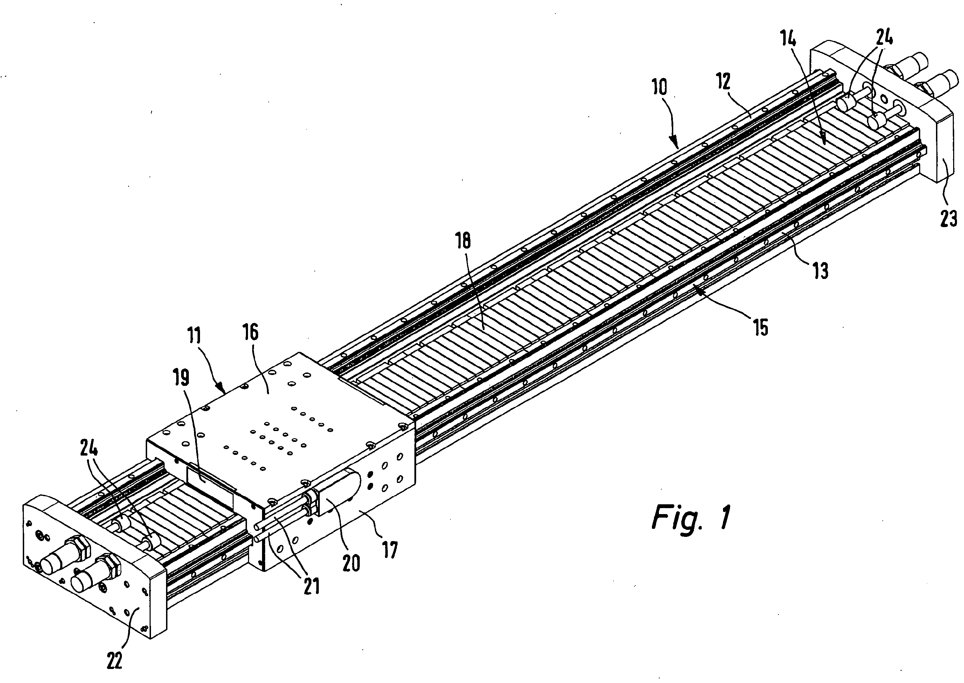

Die in Figur 1 dargestellte elektrische Lineardirektantriebsvorrichtung besitzt einen langgestreckten Stator 10, entlang dem ein Schlitten 11 verfahrbar geführt ist. Zur Führung des Schlittens 11 sind am Stator 10 zwei Führungsschienen 12, 13 angebracht, die an aneinandergrenzenden, unterschiedlich orientierten Seiten des Stators angeordnet sind, nämlich die eine Führungsschiene 12 an der Oberseite 14 des Stators 10 und die andere Führungsschiene 13 an einer der beiden angrenzenden Schmalseiten, nämlich an der Schmalseite 15. Dabei ist die Führungsschiene 12 an dem von der Schmalseite 15 entfernten Randbereich der Oberseite 14 angebracht, sodass die beiden Führungsschienen 12, 13 möglichst weit voneinander entfernt positioniert sind. Da die Oberseite 14 im Wesentlichen einen Winkel von 90° zur Schmalseite 15 einnimmt, sind die Führungsschienen 12, 13 entsprechend um einen Winkel von 90° zueinander versetzt. Dementsprechend weist der Schlitten 11 einen L-förmigen Querschnitt auf, wobei der größere plattenartige Schenkel einen ersten Schlittenbereich 16 bildet und die Oberseite 14 übergreift, während der kleinere plattenförmige Schenkel einen zweiten Schlittenbereich 17 bildet und die Schmalseite 15 übergreift. Die beiden Schlittenbereiche 16, 17 sind starr, beispielsweise einstückig, miteinander verbunden, wobei die Schlittenbereiche 16, 17 rechtwinklig zueinander angeordnet sind.

Der Schlitten 11 wird mittels in Figur 1 nicht sichtbaren Führungselementen an den Führungsschienen 12, 13 geführt, die an den Innenseiten des Schlittens 11 angeordnet sind und die in Verbindung mit den folgenden Figuren noch näher beschrieben werden.

Zum elektrischen Antrieb des Schlittens 11 dient in an sich bekannter Weise einerseits eine aus einer Vielzahl aneinandergereihter Permanentmagneten bestehende Permanentmagnetanordnung 18, die sich über die gesamte Länge des Stators 10 erstreckt, und andererseits eine damit zusammenwirkende Antriebsspulenanordnung 19, die an der Innenseite des ersten Schlittenbereichs 16 angeordnet ist und die in Figur 1 infolge der perspektivischen Außenansicht nicht erkennbar ist. Sie wird in Verbindung mit den nachfolgenden Figuren noch gezeigt. Eine derartige Antriebsanordnung ist beispielsweise aus dem eingangs angegebenen Stand der Technik bekannt.

Zur Erregung der Antriebsspulenanordnung 19 besitzt der Schlitten 11 eine elektrische Anschlussanordnung 20 am zweiten Schlittenbereich 17, die über Versorgungsleitungen 21 mit einer nicht dargestellten elektrischen Steuervorrichtung verbunden ist. Da sich der Schlitten 11 im Betrieb bewegt, müssen die Versorgungsleitungen 21 entsprechend mitgeführt werden, beispielsweise mittels einer Schleppkette. Alternativ hierzu kann die Anschlussanordnung 20 auch an anderer Stelle vorgesehen werden, z. B. am ersten Schlittenbereich 16.

Prinzipiell ist auch die umgekehrte Anordnung möglich, das heißt, am Stator 10 befindet sich die langgestreckte Antriebsspulenanordnung, während der Schlitten 11 die Permanentmagnetanordnung trägt.

Der Stator 10 ist an seinen beiden entfernten Enden mit Abschlussplatten 22, 23 versehen, die Endanschlagglieder 24 für den Schlitten 11 tragen. Diese Endanschlagglieder 24 können auch als Endanschlagdämpfer ausgebildet sein.

Die in Figur 1 sichtbaren flächigen Außenseiten der Schlittenbereiche 16, 17 dienen als Montageflächen für mittels des Schlittens 11 zu bewegende Lasten beziehungsweise Einrichtungen, wobei auch andere Anbauten, wie Kühlkörper, elektrische Anschlussanordnungen 20, Schleppketten und dergleichen, angebracht werden können. Weiterhin können diese Schlittenbereiche 16, 17, insbesondere der erste Schlittenbereich 16, zur Montage des Schlittens 11 an einem Befestigungspunkt dienen, wobei dann der Stator 10 relativ zum Schlitten 11 bewegt wird und beispielsweise an einem oder an beiden Enden eine Last beziehungsweise einen zu bewegenden Gegenstand trägt.

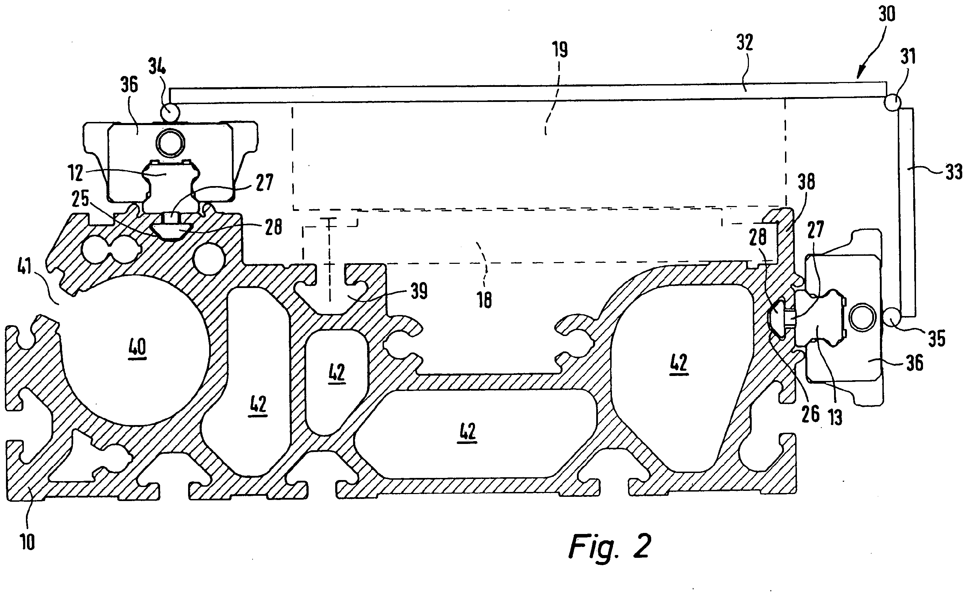

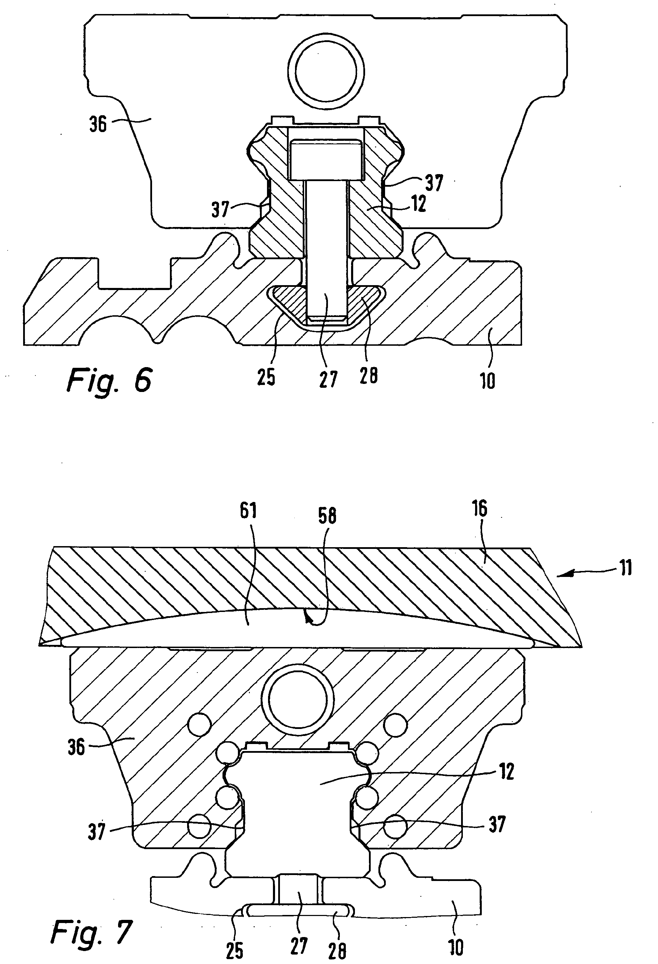

In Figur 2 ist der Stator 10 im Querschnitt gezeigt, er ist als langgestreckter Profilkörper, beispielsweise als - Strangpress- oder Stranggussprofil, ausgebildet und besteht beispielsweise aus Aluminium oder einer Aluminiumlegierung. Zur Fixierung der beiden Führungsschienen 12, 13 besitzt der Stator 10 an der Oberseite 14 und an der Schmalseite 15 je eine Längsnut 25, 26, wobei die Führungsschienen 12, 13 gemäß der detaillierteren Darstellung in Figur 6 mittels Halteschrauben 27 fixiert sind, die mit in den Längsnuten 25, 26 eingebrachten Nutensteinen 28 verschraubt sind. Je nach Länge der Führungsschienen 12, 13 wird hierzu eine mehr oder weniger große Anzahl von Halteschrauben 27 und Nutensteinen 28 eingesetzt.

Die Nutensteine 28 besitzen ein bezüglich der Längsnuten 25, 26 kleineres Profil, sodass zum Ausgleich von Fertigungstoleranzen und sonstigen Toleranzen eine gewisse Justierung der Führungsschienen 12, 13 infolge des Spiels zwischen Nutensteinen 28 und Längsnuten 25, 26 ermöglicht wird. Dies ist insbesondere bei einem starren Schlitten 11, wie er in Figur 1 dargestellt ist, von Wichtigkeit. Durch die Möglichkeit der Justierung ist ein Überfräsen der Auflagefläche für die Führungsschienen 12, 13 nicht erforderlich.

Bei gelenkigen Schlitten, wie sie in den Figuren 2 bis 4 dargestellt sind, ist eine Ausrichtung und Justierung der Führungsschienen 12, 13 nicht unbedingt bzw. nicht erforderlich.

Daher können zum Beispiel auch fest mit dem Stator verbundene Führungsschienen eingesetzt werden, beispielsweise eingewalzte, angeschweißte, angelötete, angepresste oder angeklebte Führungsschienen.

Der in Figur 2 dargestellte Schlitten 30 besitzt zwei über ein Gelenk 31 miteinander verbundene Schlittenbereiche 32, 33. Diese Schlittenbereiche 32, 33 sind wiederum über Gelenke 34, 35 mit Führungselementen 36 verbunden, die im Ausführungsbeispiel als Kugelumlaufführungselemente ausgebildet sind, wie sie beispielsweise aus der DE 3537728 A1 bekannt sind. Diese Führungselemente 36 weisen ein im Wesentlichen U-förmiges Profil auf und umgreifen die Führungsschienen 12, 13 mit ihren Schenkeln. Die Führungsschienen 12, 13 weisen im mittleren Bereich an ihren beiden entgegengesetzten Außenseiten nutartige Vertiefungen 37 auf, in die die freien Endbereiche der Schenkel der Führungselemente 36 eingreifen, sodass die Führungsschienen 12, 13 in gewisser Weise hintergriffen werden. Dies führt dazu, dass sich die Führungselemente 36 ausschließlich in der Längsrichtung der Führungsschienen 12, 13 bewegen können, während alle Bewegungen in andere Richtungen formschlüssig geführt sind. Eine solche Ausbildung der Führungselemente 36 muss nicht zwangsläufig eine Ausbildung als Kugelumlaufführungselemente bedeuten, vielmehr sind auch andere Führungsarten, wie Gleitführungen, möglich.

Die Schlittenbereiche 32, 33 sind so dimensioniert, dass sie zusammen wiederum im Wesentlichen ein L-Profil bilden. Infolge von Wärmeausdehnungen des sich im Betrieb bis auf ca. 100° oder darüber erwärmenden Schlittens 11 kann sich der Winkel geringfügig verändern.

Um die Wärmeausdehnung so gering wie möglich zu halten, wird als Material für den Schlitten 30 und insbesondere für den Schlitten 11 ein Material mit geringem Wärmeausdehnungskoeffizienten gewählt, beispielsweise Stahl oder eine Stahllegierung oder ein Kunststoffmaterial, wie CFK, oder ein Verbundmaterial. Dabei kann im Falle des Schlittens 30 auch einer der Schlittenbereiche 32, 33 aus Stahl oder einer Stahllegierung und der andere Schlittenbereich aus CFK bestehen.

Die Oberseite 14 des Stators 10 besitzt eine flächige Vertiefung zur Aufnahme der Permanentmagnetanordnung 18. Diese besitzt eine vorgefertigte, leistenförmige Gestalt und wird zur Fixierung am Stator 10 mit der einen Längsseite hinter einen leistenartigen Haltevorsprung 38 geschoben und am gegenüberliegenden Längsrandbereich mit nicht näher dargestellten Nutensteinen verschraubt, die in eine entsprechend angeordnete Längsnut 39 einschiebbar sind.

An der Unterseite des ersten Schlittenbereichs 32 beziehungsweise gemäß Figur 1 des ersten Schlittenbereichs 16 ist die Antriebsspulenanordnung 19 montiert und gehalten. Sie steht der Permanentmagnetanordnung 18 unmittelbar mit geringem Abstand gegenüber.

Ein kreiszylindrischer Durchgangskanal 40 verläuft in Längsrichtung durch das Profil des Stators 10. Er dient zur Aufnahme eines nicht dargestellten Kolbens, beispielsweise eines kolbenstangenlosen Kolbens, und dient als fluidischer Zusatzantrieb für den Schlitten 30 beziehungsweise den Schlitten 11. Ein solcher fluidischer Zusatzantrieb für eine elektrische Linearantriebsvorrichtung ist beispielsweise aus der EP 1404011 A1 bekannt. Der Kolben ist dabei magnetisch oder mechanisch mit dem Schlitten 30 beziehungsweise 11 gekoppelt. Zur mechanischen Kopplung besitzt der Durchgangskanal 40 einen nach außen offenen Schlitz 41, durch den ein nicht dargestelltes mechanisches Kopplungsglied für den Schlitten hindurchgreift, wobei der Schlitz im Übrigen durch ein Dichtungsband abgedichtet ist, wie dies im angegebenen Stand der Technik dargestellt und beschrieben ist. Im Falle einer magnetischen Kopplung entfällt der Schlitz 41.

Ein Kolben im Durchgangskanal 40 kann auch zum Gravitationsausgleich dienen. Der Durchgangskanal 40 ist dabei über eine der Abschlussplatten 22, 23 mit einem Fluidvolumen 42 verbunden, das ebenfalls in Form von Längskanälen im Profil des Stators 10 verläuft. Durch die Bewegung des Kolbens verändert sich Volumen im Durchgangskanal 40, wobei in Folge des angekoppelten Fluidvolumens 42 jeweils nur ein geringer Druckunterschied auftritt. Insgesamt wird durch diese Anordnung eine Luftfeder gebildet.

Ein fluidischer Zusatzantrieb oder die fluidische Rückströmeinrichtung sind optionale Einrichtungen und sind für die erfindungsgemäße Anordnung nicht zwingend erforderlich.

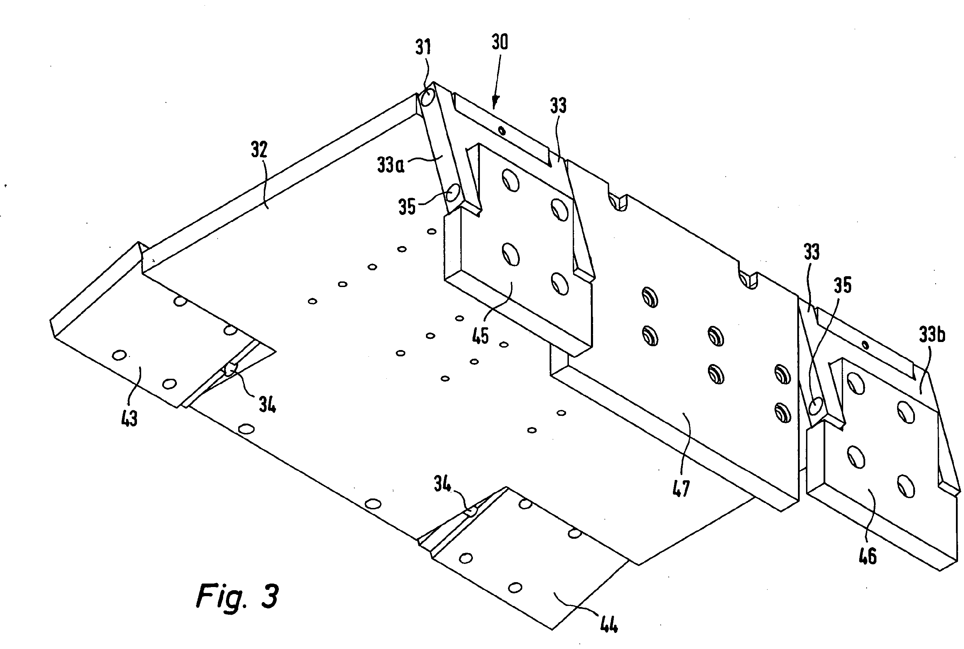

In Figur 3 ist der Schlitten 30 perspektivisch und detaillierter dargestellt. Zur gelenkigen Anbringung von zwei Führungselementen 36 am ersten Schlittenbereich 32 besitzt dieser an seinen beiden vom zweiten Schlittenbereich 33 entfernten Eckbereichen Halteplatten 43, 44, die mittels des Gelenks 34 schwenkbar in entsprechenden Aussparungen angeordnet sind.

Der zweite, über das Gelenk 31 mit dem ersten Schlittenbereich 32 verbundene Schlittenbereich 33 ist zweiteilig ausgebildet, wobei jeder Teilbereich 33a und 33b an seinem freien Ende schwenkbare Halteplatten 45, 46 zur Anbringung von Führungselementen 36 trägt. Die Halteplatten 45, 46 sind dabei über das zweiteilig ausgebildete Gelenk 35 mit den Teilbereichen 33a und 33b schwenkbar verbunden. Zwischen den Teilbereichen 33a und 33b des zweiten Schlittenbereichs 33 ist eine starr und rechtwinklig mit dem ersten Schlittenbereich 32 verbundene Montageplatte 47 angeordnet. Diese kann auch einstückig mit dem ersten Schlittenbereich 32 verbunden sein.

Gemäß Figur 3 sind an den vier Halteplatten 43-46 vier Führungselemente 36 am Schlitten 30 anbringbar. Prinzipiell könnte es sich dabei auch nur um drei Führungselemente 36 handeln. In diesem Falle tritt entweder anstelle der beiden schwenkbaren Halteplatten 43, 44 eine mittige Halteplatte am ersten Schlittenbereich 32 oder anstelle der Halteplatten 45, 46 eine Halteplatte, mittig dann am einstückig ausgebildeten zweiten Schlittenbereich 33, der sich entweder über die gesamte Breite erstreckt oder der von zwei starren Montageplatten in gleicher Ebene eingerahmt ist.

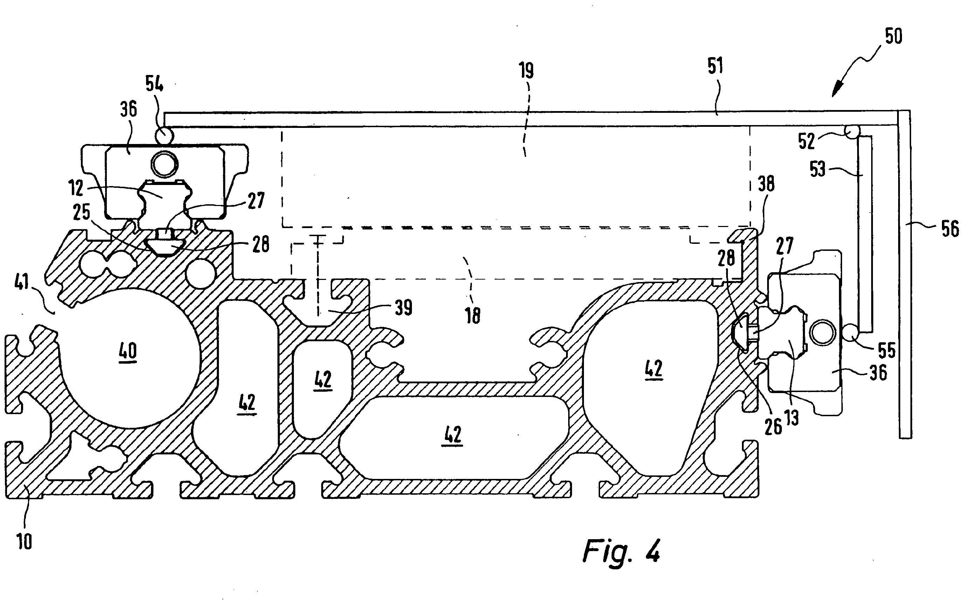

In Figur 4 ist eine weitere Ausführung eines Schlittens 50 dargestellt. Bei diesem ist wiederum ein erster Schlittenbereich 51, der die Antriebsspulenanordnung 19 trägt, über ein Gelenk 52 mit einem zweiten Schlittenbereich 53 verbunden. Die vom Gelenk 52 entfernten Endbereiche dieser Schlittenbereiche 51, 53 sind wiederum gemäß Figur 2 über Gelenke 54, 55 mit Führungselementen 36 schwenkbar verbunden. Die gelenkigen Verbindungen können beispielsweise gemäß Figur 3 ausgebildet sein. Im Unterschied zur Figur 2 übergreift der erste Schlittenbereich 51 geringfügig, wobei am freien Ende des übergreifenden Bereichs rechtwinklig und starr eine Montageplatte 56 fixiert ist. Diese übergreift somit den zweiten Schlittenbereich 53 und die daran angebrachten Führungselemente 36.

Bei dieser Ausführungsform bildet der erste Schlittenbereich 51 zusammen mit der Montageplatte 56 zwei rechtwinklig zueinander angeordnete Montageflächen, wobei dieser Winkel unabhängig von der Wärmedehnung immer beibehalten wird. Die Montageplatte 56 besitzt in der Bewegungsrichtung dieselbe Ausdehnung wie der erste Schlittenbereich 51 und damit wie der Schlitten 50 selbst. Der zweite Schlittenbereich 53 kann gemäß Figur 3 zweiteilig ausgebildet sein oder auch einteilig, wobei bei einteiliger Ausführung der zweite Schlittenbereich 53 eine der des ersten Schlittenbereichs 51 entsprechende Länge in der Bewegungsrichtung aufweisen kann und ein oder zwei schwenkbare Halteplatten besitzen kann, oder dieser zweite Schlittenbereich 53 ist lediglich als schmale Platte oder Leiste ausgebildet und mittig angeordnet. Prinzipiell können auch die beiden Teilbereiche 33a, 33b gemäß Figur 3 als schmale Leisten oder Stäbe ausgebildet sein.

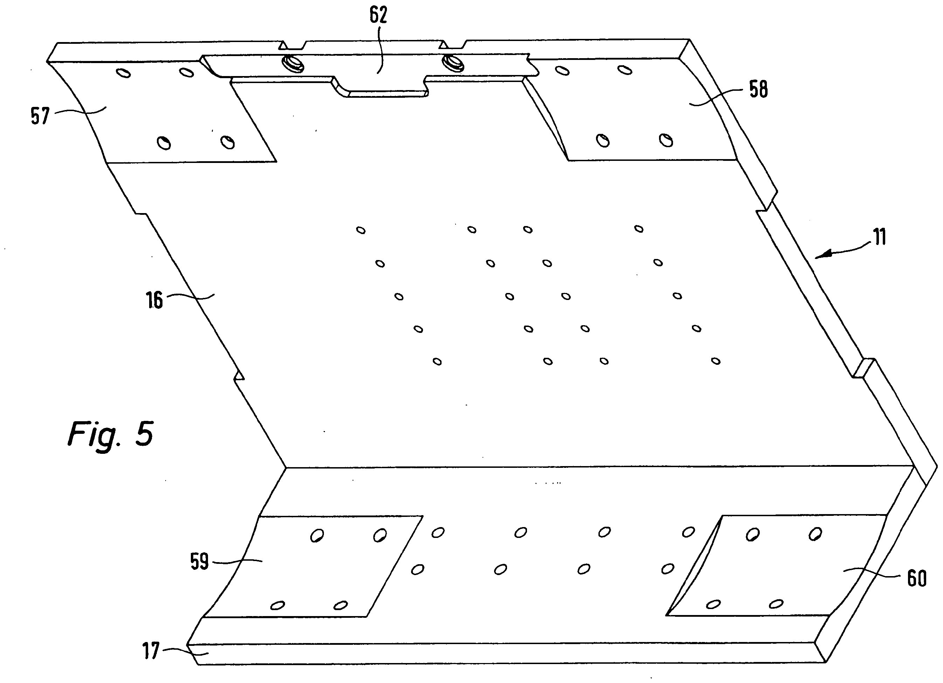

In Figur 5 ist der starre Schlitten 11 gemäß Figur 1 detaillierter dargestellt. An den dem Stator 10 zugewandten Innenseiten der beiden Schlittenbereiche 16, 17 sind vier gekrümmte Ausgleichsausnehmungen 57-60 zur Aufnahme von Führungselementen 36 gemäß Figur 7 angeordnet. Diese Führungselemente 36 besitzen an ihren dem Schlitten zugewandten Seiten entsprechend gekrümmte Winkelausgleichselemente 61, mit denen sie in den Ausgleichsausnehmungen 57-60 montiert werden, beispielsweise geschraubt oder geklebt. Dadurch können Winkelfehler der Führungsschienen 12, 13 beziehungsweise des Stators 10 ausgeglichen werden als zusätzlicher Ausgleich zu den in den Längsnuten 25, 26 spielbehaftet angeordneten Nutensteinen 28. Die Ausgleichsausnehmungen 57, 58 am ersten Schlittenbereich 16 sind an den vom zweiten Schlittenbereich 17 entfernten Eckbereichen angeordnet, während die Ausgleichsausnehmungen 59, 60 am zweiten Schlittenbereich 17 ebenfalls an entgegengesetzten Randbereichen, jedoch dort im Wesentlichen mittig angeordnet sind.

Eine umgekehrte Anordnung ist grundsätzlich ebenfalls möglich, das heißt, die Führungselemente 36 sind mit Ausgleichsausnehmungen versehen, während an den Schlittenbereichen 16, 17 entsprechende gewölbte Winkelausgleichselemente angebracht sind.

Zwischen den Ausgleichsausnehmungen 57, 58 am ersten Schlittenbereich 16 ist eine Halteaufnahme 62 zur Aufnahme einer Positionsmesseinrichtung angeordnet. Diese kann beispielsweise in an sich bekannter Weise als magnetfeldempfindliche Anordnung ausgebildet sein, beispielsweise als Hall-Sensoranordnung, die mit einer streifenförmig magnetisierten Band- oder Leistenanordnung am Stator 10 zusammenwirkt. Anstelle von magnetischen Markierungen können auch optische Markierungen treten, die entsprechend optisch abgetastet werden.

Um im Hinblick auf die Positionsmessung keine regelungstechnischen Probleme durch eine spielbehaftete Konstruktion zu bekommen, ist der erste Schlittenbereich 16 bzw. dessen Halteaufnahme 62 über die Positionsmesseinrichtung starr mit dem Messsystem und der Antriebsspulenanordnung 19 verbunden. Hierdurch ist ein eventuelles axiales Spiel der Gelenke unproblematisch.

## Patentansprüche

1. Elektrische Lineardirektantriebsvorrichtung mit einem zwei Führungsschienen (12, 13) zur Linearführung eines angetriebenen Schlittens (30; 50) aufweisenden Stator (10), wobei eine den elektrischen Antrieb bewirkende Permanentmagnetanordnung (18) und eine relativ dazu bewegbare Antriebsspulenanordnung (19) vorgesehen sind, **dadurch gekennzeichnet, dass** die Führungsschienen (12, 13) an aneinandergrenzenden, unterschiedlich orientierten Seiten des Stators (10) angeordnet sind und dass der gelenkig ausgebildete Schlitten (30; 50) über eine parallel zu den Führungsschienen (12, 13) verlaufende Schwenkachse (31; 52) miteinander verbundene, plattenförmig ausgebildete Schlittenbereiche (32, 33; 51, 53) aufweist, an denen die Führungselemente (36) ihrerseits gelenkig angebracht sind und dass der Schlitten (30; 50) jede dieser Seiten wenigstens teilweise übergreift, und dass Führungskanäle für die Führungsschienen (12, 13) aufweisende Führungselemente (36) am Schlitten (30; 50) angeordnet sind, wobei der Schlitten (30; 50) ein im Wesentlichen L-förmiges Profil besitzt und wobei die plattenförmigen Schlittenbereiche (32, 33; 51, 53) rechtwinklig zueinander angeordnet sind.

2. Lineardirektantriebsvorrichtung nach Anspruch 1, **dadurch gekennzeichnet, dass** der Schlitten (30; 50) die Antriebsspulenanordnung (19) an seiner der Permanentmagnetanordnung (18) am Stator (10) gegenüberliegenden Seite trägt.

3. Lineardirektantriebsvorrichtung nach einem der vorhergehenden Ansprüche, **dadurch gekennzeichnet, dass** der insbesondere als Strangpress- oder Stranggussprofil ausgebildete Stator (10) justierbare Fixiermittel für die Führungsschienen (12, 13) aufweist.

4. Lineardirektantriebsvorrichtung nach Anspruch 3, **dadurch gekennzeichnet, dass** die Führungsschienen (12, 13) an Längsnuten (25, 26) des Stators (10) mittels justierbarer Nutensteine (28) fixierbar sind.

5. Lineardirektantriebsvorrichtung nach einem der vorhergehenden Ansprüche, **dadurch gekennzeichnet, dass** der Schlitten (30; 50) an den Führungsschienen (12, 13) mittels zwei, vorzugsweise drei oder vier Führungselementen (36) geführt ist, die derart formschlüssig mit den Führungsschienen (12, 13) zusammenwirken, dass nur eine Relativbewegung in der Längsrichtung der Führungsschienen (12, 13) möglich ist.

6. Lineardirektantriebsvorrichtung nach Anspruch 5, **dadurch gekennzeichnet, dass** die Führungselemente (36) als Kugelumlaufführungselemente ausgebildet sind.

7. Lineardirektantriebsvorrichtung nach einem der vorhergehenden Ansprüche, **dadurch gekennzeichnet, dass** die Führungselemente (36) über gekrümmte Winkelausgleichselemente oder - bereiche an entsprechend gekrümmten Ausgleichsflächen oder - ausnehmungen fixierbar ausgebildet sind.

8. Lineardirektantriebsvorrichtung nach einem der vorhergehenden Ansprüche, **dadurch gekennzeichnet, dass** ein von der Antriebskraft beaufschlagbarer erster Schlittenbereich (32; 51) starr mit einem rechtwinklig dazu angeordneten plattenartigen Montagebereich (47; 56) verbunden ist, der einen zweiten ein- oder zweiteilig ausgebildeten Schlittenbereich (33; 53) übergreift oder im Wesentlichen in gleicher Ebene zu diesem angeordnet ist.

9. Lineardirektantriebsvorrichtung nach einem der vorhergehenden Ansprüche, **dadurch gekennzeichnet, dass** eine Positionsmesseinrichtung zur Abtastung von entlang des Stators (10) angeordneten Positionsmarkierungen am Schlitten (30; 50) angeordnet ist.

10. Lineardirektantriebsvorrichtung nach einem der vorhergehenden Ansprüche, **dadurch gekennzeichnet, dass** ein Längskanal (40) durch den Stator (10) einen mit dem Schlitten (30; 50) mechanisch oder magnetisch gekoppelten Kolben enthält, der vorzugsweise als Antriebskolben oder Gravitations-Ausgleichseinrichtung ausgebildet ist.

11. Lineardirektantriebsvorrichtung nach einem der vorhergehenden Ansprüche, **dadurch gekennzeichnet, dass** der Schlitten (30; 50) aus Stahl oder einer Stahllegierung und/oder aus CFK besteht.

## Claims

1. An electrical direct linear drive device, with a stator (10) having two guide rails (12, 13) for the linear guidance of a driven carriage (30; 50), wherein a permanent magnet arrangement (18) providing the electrical drive and a drive coil arrangement (19) that is movable relatively thereto, are provided, **characterized in that** the guide rails (12, 13) are arranged on adjacent and differently oriented sides of the stator (10) and **in that** the articulated carriage (30; 50) comprises two plate-shaped carriage areas (32, 33; 51, 53), which are connected with each other by a hinge (31; 52) which is oriented parallel to the guide rails (12, 13) and **in that** the plate-shaped carriage areas (32, 33; 51, 53) are connected by hinges (34, 35) with guide elements (36) and **in that** the carriage (30; 50) extends at least partially over each one of said sides of the stator (10), and wherein guide elements (36) having guide channels for the guide rails (12, 13) are arranged on the carriage (30; 50), wherein the carriage (30; 50) has a substantially L-shaped profile and wherein the two plate-shaped carriage areas (32, 33; 51, 53) are arranged at right angles with each other.

2. The direct linear drive device according to claim 1, **characterized in that** the carriage (30; 50) supports the drive coil arrangement (19) on the stator (10) on its side opposite the permanent magnet arrangement (18).

3. The direct linear drive device according to one of the aforementioned claims, **characterized in that** the stator, in particular being manufactured as a profile extrusion part or cast part, comprises adjustable fixation means for the guide rails.

4. The direct linear drive device according to claim 3, **characterized in that** the guide rails (12, 13) can be fixed in place in longitudinal grooves (25, 26) of the stator (10) by means of adjustable sliding blocks (28).

5. The direct linear drive device according to one of the aforementioned claims, **characterized in that** the carriage (30; 50) is guided on the guide rails (12, 13) by means of two, preferably of three or four, guide elements (36) that cooperate in a positively connected manner with the guide rails (12, 13) in a manner that only a relative movement in the linear direction of the guide rails (12, 13) is possible.

6. The direct linear drive device according to claim 5, **characterized in that** the guide elements (36) are embodied in the form of revolving ball guide elements.

7. The direct linear drive device according to one of the aforementioned claims, **characterized in that** the guide elements (36) are embodied so they can be fixed in place by means of curved angle compensating elements or angle compensating areas on correspondingly curved compensation surfaces or compensation recesses.

8. The direct linear drive device according to one of the aforementioned claims, **characterized in that** a first carriage area (32; 51) that can be acted upon by the driving force, is rigidly connected with a plate-like mounting area (47; 56) that is arranged at right angles to it and extends over the second carriage area (33; 53) that is embodied to be of one or two pieces, or is arranged in essentially in the same plane with it.

9. The direct linear drive device according to one of the aforementioned claims, **characterized in that** a position measuring device for scanning position markings arranged along the stator (10) is also arranged on the carriage (30; 50).

10. The direct linear drive device according to one of the aforementioned claims, **characterized in that** a linear channel (40) through the stator (10) contains a piston, which is mechanically or magnetically connected with the carriage and which preferably is realized as a drive piston or as a gravity compensation system.

11. The direct linear drive device according to one of the aforementioned claims, **characterized in that** the carriage consists of steel, or a steel alloy, and/or of carbonreinforced fiber.

## Revendications

1. Dispositif d'entraînement direct linéaire électrique avec un stator (10) présentant deux rails de guidage (12, 13) servant au guidage linéaire d'un chariot (30 ; 50) entraîné, dans lequel un ensemble formant aimant permanent (18) provoquant l'entraînement électrique et un ensemble de bobines d'entraînement (19) pouvant être déplacé par rapport à ce dernier sont prévus, **caractérisé en ce que** les rails de guidage (12, 13) sont disposés au niveau de côtés contigus, orientés différemment du stator (10) et que le chariot (30 ; 50) réalisé de manière articulée présente des zones de chariot (32, 33 ; 51, 53) reliées entre elles par l'intermédiaire d'un axe de pivotement (31 ; 52) s'étendant de manière parallèle aux rails de guidage (12, 13), réalisées en forme de panneau, au niveau desquelles les éléments de guidage (36) sont installés quant à eux de manière articulée, et que le chariot (30 ; 50) surmonte au moins en partie chacun desdits côtés, et que des éléments de guidage (36) présentant des canaux de guidage pour les rails de guidage (12, 13) sont disposés au niveau du chariot (30 ; 50), dans lequel le chariot (30 ; 50) possède un profil sensiblement en forme de L et dans lequel les zones de chariot (32, 33 ; 51, 53) en forme de panneau sont disposées à angle droit les unes par rapport aux autres.

2. Dispositif d'entraînement direct linéaire selon la revendication 1, **caractérisé en ce que** le chariot (30 ; 50) supporte l'ensemble de bobines d'entraînement (19) au niveau de son côté faisant face à l'ensemble formant aimant permanent (18) au niveau du stator (10).

3. Dispositif d'entraînement direct linéaire selon l'une quelconque des revendications précédentes, **caractérisé en ce que** le stator (10) réalisé en particulier sous la forme d'un profil extrudé ou coulé en continu présente des moyens de fixation pouvant être ajustés pour les rails de guidage (12, 13).

4. Dispositif d'entraînement direct linéaire selon la revendication 3, **caractérisé en ce que** les rails de guidage (12, 13) peuvent être fixés au niveau de rainures longitudinales (25, 26) du stator (10) au moyen de coulisseaux (28) pouvant être ajustés.

5. Dispositif d'entraînement direct linéaire selon l'une quelconque des revendications précédentes, **caractérisé en ce que** le chariot (30 ; 50) est guidé au niveau des rails de guidage (12, 13) au moyen de deux, de préférence trois ou quatre éléments de guidage (36), qui coopèrent de telle manière par complémentarité de forme avec les rails de guidage (12, 13) que seulement un déplacement relatif dans la direction longitudinale des rails de guidage (12, 13) est possible.

6. Dispositif d'entraînement direct linéaire selon la revendication 5, **caractérisé en ce que** les éléments de guidage (36) sont réalisés sous la forme d'éléments de guidage à recirculation de billes.

7. Dispositif d'entraînement direct linéaire selon l'une quelconque des revendications précédentes, **caractérisé en ce que** les éléments de guidage (36) sont réalisés de manière à pouvoir être fixés par l'intermédiaire d'éléments ou de zones de compensation d'angle incurvés/incurvées au niveau de surfaces ou d'évidements de compensation incurvées/incurvés de manière correspondante.

8. Dispositif d'entraînement direct linéaire selon l'une quelconque des revendications précédentes, **caractérisé en ce qu'**une première zone de chariot (32 ; 51) pouvant être soumise à l'action de la force d'entraînement est reliée de manière rigide à une zone de montage (47 ; 56) de type panneau disposée à angle droit par rapport à cette dernière, qui surmonte une deuxième zone de chariot (33 ; 53) réalisée en une partie ou en deux parties ou est disposée sensiblement dans un même plan par rapport à cette dernière.

9. Dispositif d'entraînement direct linéaire selon l'une quelconque des revendications précédentes, **caractérisé en ce qu'**un système de mesure de position servant à balayer des repères de position disposés le long du stator (10) est disposé au niveau du chariot (30 ; 50).

10. Dispositif d'entraînement direct linéaire selon l'une quelconque des revendications précédentes, **caractérisé en ce qu'**un canal longitudinal (40) à travers le stator (10) contient un piston couplé de manière mécanique ou magnétique au chariot (30 ; 50), qui est réalisé de préférence sous la forme d'un piston d'entraînement ou d'un système de compensation de gravitation.

11. Dispositif d'entraînement direct linéaire selon l'une quelconque des revendications précédentes, **caractérisé en ce que** le chariot (30 ; 50) est constitué d'acier ou d'un alliage d'acier et/ou de CFK (plastique renforcé de fibres de carbone).
